# EUROPEAN PATENT APPLICATION

(11) **EP 1 852 402 A1**
(43) Date of publication of application: **07.11.2007**
(21) Application number: 05814220.9
(22) Date of filing: 06.12.2005
(51) Int. Cl.: C03C 17/36, B32B 9/00, B01J 35/02, C03C 27/06

(54) **GLASS MEMBER HAVING PHOTOCATALYTIC FUNCTION AND HEAT RAY REFLECTIVE FUNCTION, AND DOUBLE LAYER GLASS EMPLOYING IT**

(30) Priority: 06.12.2004 JP 2004353436
(71) Applicant: Nippon Sheet Glass Company Limited, Tokyo 108-6321 (JP)
(72) Inventor: KIJIMA, Yoshifumi, Minato-ku, Tokyo, 108-6321 (JP); INAOKA, Daisuke, Minato-ku, Tokyo, 108-6321 (JP); ANZAKI, Toshiaki, Minato-ku, Tokyo, 108-6321 (JP); WADA, Hiromasa, Minato-ku, Tokyo, 108-6321 (JP)
(74) Representative: Hall, Matthew Benjamin
(86) International application number: PCT/JP2005/022378
(87) International publication number: WO 2006/062102

(57) **Abstract**

The present invention provides a glass member including a photocatalyst layer and a heat reflecting layer, the glass member having high photocatalytic activity and exhibiting a low reflectance and a colorless or pale blue reflection color tone or a bluish green or green reflection color tone. The glass member is produced by laminating an antistripping layer made of silicon oxide or the like, a crystalline undercoat layer made of zirconium oxide or the like and a photocatalyst layer made of titanium oxide or the like on the other surface of a glass substrate having a heat reflecting layer formed on one surface thereof. The heat reflecting layer is formed such that the other surface of the glass substrate has a reflection chromaticity (a*, b*) satisfying -4≤a*≤2 and -5≤b*≤0 and a visible light reflectance of 10% or less, the crystalline undercoat layer is allowed to have a thickness ranging from 2 to 28 nm, and the photocatalyst layer is allowed to have a thickness ranging from 2 to 20 nm, whereby the glass member having a colorless or pale blue reflection color tone can be produced. Likewise, the heat reflecting layer is formed such that the reflection chromaticity (a*, b*) satisfies -15≤a*≤-2 and -10≤b*≤10 and the visible light reflectance is 13% or less, the crystalline undercoat layer is allowed to have a thickness ranging from 2 to 28 nm, and the photocatalyst layer is allowed to have a thickness ranging from 2 to 14 nm, whereby the glass member having a bluish green or green reflection color tone can be produced.

## Description

### Technical Field

The present invention relates to a glass member having a heat reflecting layer laminated on one surface of a glass substrate and a photocatalytic layer laminated on the other surface thereof, and to double paned glass including the same.

### Background Art

Photocatalysts such as anatase type titanium oxide are known to exhibit an antifouling effect to decompose organic materials under ultraviolet light irradiation, antibacterial activity and hydrophilicity. Recently, photocatalysts that exhibit a catalytic function under visible light irradiation have also attracted attention. To impart such a photocatalytic function to a substrate such as glass, a photocatalyst layer is placed on a surface of the substrate. As the formation method, vacuum film formation methods such as sputtering and vapor deposition, and reduced pressure film formation methods are widely used.

When forming a photocatalyst layer on a surface of a substrate such as glass as just described, a method is proposed to place an undercoat layer between the substrate and the photocatalyst layer (Patent Documents 1 to 7).

Patent Document 1 discloses a method in which, when forming a medium comprising a photocatalytic composition on a surface of a glass substrate, an undercoat layer is formed between the glass substrate and the medium so as to prevent deterioration of the mediums function caused by alkali eluted from the glass. This document proposes to use, for example, zirconium oxide, in particular, amorphous zirconium oxide as the undercoat layer. Patent Document 2 discloses the use of zirconium oxide as an undercoat layer formed between a substrate and a photocatalyst layer and the use of titanium oxide as the photocatalyst layer. Patent document 3 discloses a method in which a metal oxide layer containing zirconium oxide is placed between a substrate and a photocatalyst layer so that the metal oxide layer suppresses the diffusion of oxygen from the photocatalyst layer to the substrate. Patent Document 4 discloses a similar method in which a zirconium oxide layer is formed between a substrate and a titanium oxide layer. Patent Document 5 discloses the use of zirconium oxide whose crystal system belongs to a monoclinic system as an undercoat layer and the use of anatase type titanium oxide as a photocatalyst layer.

Patent Documents 6 and 7 disclose the relationship of undercoat layer and photocatalyst layer thicknesses with optical properties. Patent Document 6 discloses a layer containing tin oxide (SnO₂) and zirconium oxide (ZrO₂) and having a thickness of 10 nm or less as an undercoat layer and a layer containing titanium oxide (TiO₂) having a thickness of 20 nm or less as a photocatalyst layer. This document teaches that it is necessary to reduce the thickness of both layers to impart transparency to the resulting glass member. Patent document 7 discloses a technique of forming a layer made of high temperature stable cubic or orthorhombic zirconium oxide between a substrate and a titanium oxide layer, and teaches that, when used in automobiles and the like, the thickness of the titanium oxide layer has to be such that the other side can be seen therethrough.

On the other hand, double paned glass is reported that includes a glass member comprising a heat reflecting layer laminated on one surface of a glass substrate and a photocatalyst layer on the other surface thereof (Patent Document 8). Double paned glass usually has two glass plates (an outdoor side glass plate and an indoor side glass plate) with a spacer placed between the two glass plates so as to create a space therebetween. A glass member as described above is used as an outdoor side glass plate, and is placed such that the photocatalyst layer serves as the outermost layer of the double paned glass and the heat reflecting layer faces the inner side of the double paned glass.
Patent Document 1: JP H09-227167A
Patent Document 2: JP H10-66878A
Patent Document 3: JP 2000-312830A
Patent Document 4: JP 2001-205094A
Patent Document 5: WO 03/53577
Patent Document 6: JP 2000-513695
Patent Document 7: WO 02/40417
Patent Document 8: WO 02/62716

### Disclosure of Invention

### Problem to be Solved by the Invention

However, when a photocatalyst layer is formed according to the methods disclosed in Patent Documents 1 to 4 and 6, problems arise in that the photocatalyst layer may not provide a sufficient photocatalytic function. Further, unless the thickness of the photocatalyst layer is increased, then the photocatalyst layer does not sufficiently function as a photocatalyst layer and the resulting glass member will have a high reflectance, or interference colors will appear. For this reason, it has been difficult for a glass member including a photocatalyst layer laminated thereon to provide a photocatalytic function while achieving desirable reflectance and color tone.

Moreover, in the double paned glass including a glass member having a heat reflecting layer formed thereon described above, because the outdoor side (photocatalyst layer side) glass plate has a high reflectance, it has been difficult to produce double paned glass whose reflection color tone viewing from outside is colorless or slightly blue, or a bluish green or green.

In view of the above, it is an object of the present invention to provide a glass member and a double paned glass, the glass member and the double paned glass including a heat reflecting layer and a photocatalyst layer, the photocatalyst layer having high photocatalytic activity and the photocatalyst layer side surface being capable of exhibiting a low reflectance along with a colorless or pale blue reflection color tone, or a bluish green or green reflection color tone.

### Means for Solving Problem

In order to achieve the above object, a glass member according to a first embodiment of the present invention is a glass member in which a heat reflecting layer is laminated on one surface of a glass substrate and a photocatalyst layer is laminated on the other surface thereof, wherein the glass substrate and the heat reflecting layer are combined such that, in a state in which the heat reflecting layer is laminated on one surface of the glass substrate and the photocatalyst layer is not laminated on the other surface of the glass substrate (hereinafter sometimes referred to as "single plate"), the other surface of the glass substrate has a reflection chromaticity (a*, b*) satisfying -4≤a*≤2 and -5<b*<0 and a visible light reflectance of 10% or less, an antistripping layer, a crystalline undercoat layer and the photocatalyst layer are laminated in this order on the other surface of the glass substrate, the crystalline undercoat layer has a thickness ranging from 2 to 28 nm, the photocatalyst layer has a thickness ranging from 2 to 20 nm, and the antistripping layer comprises at least one material selected from the group consisting of an oxide, an oxynitride and a nitride containing at least one of silicon and tin.

A glass member according to a second embodiment of the present invention is a glass member in which a heat reflecting layer is laminated on one surface of a glass substrate and a photocatalyst layer is laminated on the other surface thereof, wherein the glass substrate and the heat reflecting layer are combined such that the other surface of the glass substrate of the single plate has a reflection chromaticity (a*, b*) satisfying -15≤a*≤-2 and -10≤b*≤10 and a visible light reflectance of 13% or less, a crystalline undercoat layer has a thickness ranging from 2 to 28 nm, the photocatalyst layer has a thickness ranging from 2 to 14 nm, and the antistripping layer comprises at least one material selected from the group consisting of an oxide, an oxynitride and a nitride containing at least one of silicon and tin.

Double paned glass of the present invention comprises two glass plates and a spacer placed between the two glass plates so as to create a space between the facing surfaces of the two glass plates, wherein at least one of the glass plates is a glass member of the present invention, and the photocatalyst layer of the glass member is placed such that the photocatalyst layer serves as an outermost layer of the double paned glass.

### Effects of the Invention

According to the glass member of the present invention, when a heat reflecting layer is laminated on a glass substrate, specifically, even when the single plate has the characteristics: the reflection chromaticity (a*, b*) of the other surface of the glass substrate is -4≤a*≤2 and -5≤b*≤0 and the visible light reflectance of the same is 10% or less, it is possible to realize a low reflectance and a colorless or pale blue reflection color tone as well as to obtain excellent photocatalytic activity. Also, even when the single plate has the characteristics: the reflection chromaticity (a*, b*) of the other surface of the glass substrate is -15≤b*≤*2 and -10≤b*≤10 and the visible light reflectance is 13% or less, it is possible to realize a low reflectance and a bluish green or green reflection color tone as well as to obtain excellent photocatalytic activity. Thus, according to the double paned glass including the glass member of the present invention, it is possible to achieve high photocatalytic activity while achieving excellent reflectance and reflection color tone for the photocatalyst layer side surface. Therefore, it is suitable for use as double paned glass for large construction use that requires excellent photocatalytic function and a clear appearance.

### Brief Description of Drawings

[FIG. 1] FIG. 1 is a cross sectional view showing an example of a glass member of the present invention.
[FIG. 2] FIG. 2 is a cross sectional view showing an example of double paned glass of the present invention.
[FIG. 3] FIG. 3 is a graph showing photocatalyst layer thickness change versus reflectance of double paned glass obtained in an example of the present invention.
[FIG. 4] FIG. 4 is a graph showing crystalline undercoat layer thickness change versus reflectance of double paned glass obtained in another example of the present invention.
[FIG. 5] FIG. 5 is a graph showing photocatalyst layer thickness change versus reflection chromaticity of double paned glass obtained in still another example of the present invention.
[FIG. 6] FIG. 6 is a graph showing photocatalyst layer thickness change versus reflection chromaticity of double paned glass obtained in still another example of the present invention.
[FIG. 7] FIG. 7 is a graph showing crystalline undercoat layer thickness change versus reflection chromaticity of double paned glass obtained in still another example of the present invention.
[FIG. 8] FIG. 8 is a graph showing crystalline undercoat layer thickness change versus reflection chromaticity of double paned glass obtained in still another example of the present invention.
[FIG. 9] FIG. 9 is a graph showing photocatalyst layer thickness change versus reflectance of double paned glass obtained in still another example of the present invention.
[FIG. 10] FIG. 10 is a graph showing crystalline undercoat layer thickness change versus reflectance of double paned glass obtained in still another example of the present invention.
[FIG. 11] FIG. 11 is a graph showing photocatalyst layer thickness change versus reflection chromaticity of double paned glass obtained in still another example of the present invention.
[FIG. 12] FIG. 12 is a graph showing photocatalyst layer thickness change versus reflection chromaticity of double paned glass obtained in still another example of the present invention.
[FIG. 13] FIG. 13 is a graph showing crystalline undercoat layer thickness change versus reflection chromaticity of double paned glass obtained in still another example of the present invention.
[FIG. 14] FIG. 14 is a graph showing crystalline undercoat layer thickness change versus reflection chromaticity of double paned glass obtained in still another example of the present invention.

### Best Mode for Carrying Out the Invention

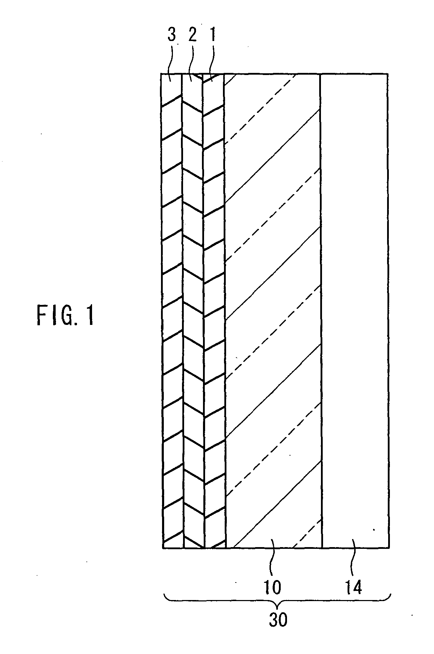

An example of the glass member of the present invention will be described with reference to FIG. 1. However, it is to be understood that the shape and size of the glass member of the present invention is not limited to those given below.

FIG. 1 is a cross sectional view of an example of the glass member of the present invention. In a glass member 30, a heat reflecting layer 14 is laminated on one surface of a glass substrate 10. On the other surface thereof, an antistripping layer 1, a crystalline undercoat layer 2 and a photocatalyst layer 3 are laminated in this order. As used herein, the "crystalline" means a state in which a lattice fringe or electron diffraction image is observed when, for example, a cross section of the laminated layer is observed by a transmission electron microscope.

In the case of a glass member according to the first embodiment of the present invention, when the heat reflecting layer 14 is laminated on one surface of the glass substrate 10, the other surface of the glass substrate 10 has a combination of a reflection chromaticity (a*, b*) satisfying -4≤a*≤2 and -5≤b*≤0 and a visible light reflectance of 10% or less. In this case, the crystalline undercoat layer 2 has a thickness ranging from 2 to 28 nm. The photocatalyst layer 3 has a thickness ranging from 2 to 20 nm. The antistripping layer 1 includes at least one selected from the group consisting of an oxide, an oxynitride and a nitride containing at least one of silicon and tin.

In the case of a glass member according to the second embodiment of the present invention, when the heat reflecting layer 14 is laminated on one surface of the glass substrate 10, the other surface of the glass substrate 10 has a combination of a reflection chromaticity (a*, b*) satisfying -15≤a*≤-2 and -10≤b*≤10 and a visible light reflectance of 13% or less. In this case, the crystalline undercoat layer 2 has a thickness ranging from 2 to 28 nm. The photocatalyst layer 3 has a thickness ranging from 2 to 14 nm. The antistripping layer 1 includes at least one selected from the group consisting of an oxide, an oxynitride and a nitride containing at least one of silicon and tin.

As a result of extensive and thorough studies, the present inventors obtained the following findings, and the present invention has been accomplished. The present inventors analyzed the structures of the cross sections of photocatalyst layers having the same thickness, but with and without photocatalytic activity, using an electron microscope. As a result, they found that the photocatalytic activity depends on the crystallinity of the photocatalyst layer. More specifically, they found that a photocatalyst layer whose crystal structure extends clearly and continuously from the interface with the substrate to the surface of the photocatalyst layer provides significant photocatalytic activity, whereas a photocatalyst layer in which no crystalline structure is observed near the interface with the substrate, and a non-crystalline (amorphous) layer (hereinafter referred to as "dead layer") is formed does not exhibit sufficient photocatalytic activity. On the basis of this finding, they found that, by forming a crystalline undercoat layer on the substrate in order to facilitate the crystal growth of a photocatalyst layer, and forming a photocatalyst layer on the surface of the crystalline undercoat layer, it is possible to suppress the formation of a dead layer. As used herein, the "dead layer" refers to a layer having typical non-crystalline (amorphous) characteristics. When a photocatalyst layer having a dead layer is irradiated by an electron beam, a halo pattern is observed in the electron diffraction image. When a photocatalyst layer substantially having no dead layer is irradiated by an electron beam, electron diffraction spots are observed.

However, even in a photocatalyst layer without the dead layer as described above, when a crystal structure is formed continuously from the interface of the crystalline undercoat layer to the surface of the photocatalyst layer, for example, ions having a small ionic radius (e.g., chloride ions, etc.) and water molecules may pass along the interstices of the crystalline structure (columnar grain structure) and diffuse from the surface of the photocatalyst layer to the glass substrate. If such diffused molecules reach the glass substrate, for example, anions such as chloride ions may react with alkali ions such as sodium contained in the glass substrate, producing a water-soluble salt, creating a possibility that the photocatalyst layer may separate from the glass substrate together with the undercoat layer, thus causing defects. Accordingly, there is a problem in durability. As used herein, the "defects" refer to discolored spots or streaks, or separated portions caused by, for example, the production of the water-soluble salt.

Then, the present inventors obtained further findings described below and conceived the present invention. More specifically, according to the present invention, a photocatalyst layer is formed on an undercoat layer which helps the growth of the crystal grains of the photocatalyst, resulting in a suppress of the appearance of the dead layer. Further, the antistripping layer described above formed between the substrate and the undercoat layer can suppress the separation of the layers from the glass substrate and the occurrence of the defects. Furthermore, by setting the thickness of the crystalline undercoat layer and the thickness of the photocatalyst layer within the above-described ranges, it is also possible to achieve a low reflectance while achieving a colorless or pale blue reflection color tone, or a bluish green or green reflection color tone (i.e., fluctuation in reflectance and color tone are suppressed). In the glass member of the present invention, because the antistripping layer, the crystalline undercoat layer and the photocatalyst layer are formed on one surface of a glass substrate, it is possible to produce double paned glass having an improved solar heat gain coefficient as compared to, for example, double paned glass including a glass member only having a heat reflecting layer formed on one surface thereof.

As described above, according to the glass member according to the first embodiment of the present invention, in a single plate including the glass substrate and the heat reflecting layer, the other surface of the glass substrate of the single plate has a combination of a reflection chromaticity (a^{*}, b*) satisfying -4≤a*≤2 and -5≤b*≤0 and a visible light reflectance of 10% or less. In this case, the crystalline undercoat layer has a thickness ranging from 2 to 28 nm, and the photocatalyst layer has a thickness ranging from 2 to 20 nm. By setting the thicknesses of both layers to fall within the above ranges, it is possible to provide double paned glass, which will be described later, including the glass member of the present invention, in which a visible light reflectance at the photocatalyst layer can be controlled within the range of 20% or less and a reflection chromaticity (a*, b*) at the photocatalyst layer can be controlled within the range of -5<a*<0 and -12<b*<0, the double paned glass having both excellent visible light reflectance and excellent reflection chromaticity.

In the glass member according to the first embodiment of the present invention, it is preferable that the crystalline undercoat layer has a thickness ranging from 3 to 20 nm and the photocatalyst layer has a thickness ranging from 3 to 12 nm. By setting the thicknesses of both layers to fall within the above ranges, it is possible to provide double paned glass, which will be described later, including the glass member of the present invention, in which a visible light reflectance at the photocatalyst layer can be controlled within the range of 17.5% or less and a reflection chromaticity (a*, b*) at the photocatalyst layer can be controlled within the range of -5<a*<0 and -8<b*<0, the double paned glass having both further excellent visible light reflectance and further excellent reflection chromaticity.

As described previously, according to the glass member according to the second embodiment of the present invention, in a single plate including the glass substrate and the heat reflecting layer, the other surface of the glass substrate of the single plate has a combination of a reflection chromaticity (a*, b*) satisfying -15≤a*≤2 and -10≤b*≤10 and a visible light reflectance of 13% or less. In this case, the crystalline undercoat layer has a thickness ranging from 2 to 28 nm, and the photocatalyst layer has a thickness ranging from 2 to 14 nm. By setting the thicknesses of both layers to fall within the above ranges, it is possible to provide double paned glass, which will be described later, including the glass member of the present invention, whose photocatalyst layer side surface has a visible light reflectance adjusted to 20% or less and a reflection chromaticity (a*, b*) adjusted to -12<a*<-2 and -10<b*<5, the double paned glass having both excellent visible light reflectance and excellent reflection chromaticity.

In the second glass member of present invention, it is preferable that the crystalline undercoat layer has a thickness ranging from 3 to 18 nm and the photocatalyst layer has a thickness ranging from 3 to 8 nm. By setting the thicknesses of both layers to fall within the above ranges, it is possible to provide double paned glass, which will be described later, including the glass member of the present invention, whose photocatalyst layer side surface has a visible light reflectance adjusted to 17.5% or less and a reflection chromaticity (a*, b*) adjusted to -9<a*<-3.7 and -10<b*<4, the double paned glass having both further excellent visible light reflectance and further excellent reflection chromaticity.

The visible light reflectance can be measured according to JIS R3106, and the reflection chromaticity can be measured according to JIS Z8729.

In the glass member of the present invention, the thickness of the antistripping layer preferably is, but is not limited to, 2 to 200 nm, and more preferably 5 to 100 nm. When the antistripping layer has a thickness of 2 nm or greater, for example, the effect of suppressing the layer separation and the occurrence of defects can be obtained sufficiently. When the thickness is 5 nm or greater, water is blocked, and there is suppression (e.g., complete suppression) of the production of the water soluble salt. When the antistripping layer has a thickness of 200 nm or less, for example, it is possible to obtain a glass member also having the excellent effect of suppressing the layer separation and the occurrence of defects, while also providing excellent cost efficiency. Even when the thickness is 100 nm or less, the effect of suppressing the layer separation and the occurrence of defects can be obtained sufficiently. As the antistripping layer, when a layer is used containing silicon dioxide having a refractive index almost equal to that of the glass substrate, if the thickness is changed within the above range, the chromaticity hardly changes. When a layer having a refractive index significantly different from that of the glass substrate is selected as the antistripping layer, for example, in order to suppress the change in chromaticity, it is preferable to reduce the thickness of the separation prevention layer to be as small as possible.

In the glass member of the present invention, the glass substrate is not specifically limited, and any conventionally known glass substrate can be used. The thickness is usually, but not limited to, 3 to 12 mm. In the present invention, as the "glass substrate", instead of a commonly used substrate made of glass, a substrate made of resin such as polycarbonate can be used as long as the properties of the single plate satisfy the above ranges.

As described previously, the antistripping layer of the present invention includes at least one selected from the group consisting of an oxide, an oxynitride and a nitride containing at least one of silicon and tin. Specific examples include silicon oxide, silicon oxynitride, silicon nitride, tin oxide, tin oxynitride and tin nitride. Among them, it is preferable to use silicon oxide. Preferably, these materials are amorphous. These materials may be used alone or in a combination of two or more. When a substrate produced by a float process is used as the glass substrate, the antistripping layer can be a tin modified layer or an amorphous tin oxide layer formed on the contact face between the glass substrate and a tin bath during the production of the substrate. As described previously, the antistripping layer has the function of blocking ions having a small ionic radius such as chloride ions and water molecules and hindering them from reaching the glass substrate from the outside. Accordingly, by forming the antistripping layer on the glass substrate, it is possible to prevent the production of a water-soluble salt due to the ions and water molecules, as well as to prevent the separation of the crystalline undercoat layer from the glass substrate caused by the dissolution of the water-soluble salt.

The crystalline undercoat layer of the present invention preferably includes, for example, at least one of a crystalline metal oxide and a crystalline metal oxynitride. As the metal oxide, zirconium oxide can be used, for example. As the metal oxynitride, zirconium oxynitride can be used, for example. Particularly, it is preferable that the crystalline undercoat layer includes at least one of zirconium oxide and zirconium oxynitride. The crystal systems of these metal substances preferably are monoclinic type. These substances may be used alone or in a combination of two or more. The crystalline undercoat layer may further include a small amount of nitrogen, tin, carbon or the like.

The photocatalyst layer of the present invention preferably includes, for example, at least one of a metal oxide and a metal oxynitride. Examples of the metal oxide include titanium oxide and titanium oxycarbide (TiOₓC_{y}). As the metal oxynitride, titanium oxynitride is used. They may be used alone or in combination of two or more. Particularly, it is preferable that the photocatalyst layer includes at least one of titanium oxide and titanium oxynitride. The crystal systems of these substances preferably are, but are not limited to, anatase type (tetragonal system). The photocatalyst layer may further include a small amount of nitrogen, tin, carbon or the like.

Further, by doping the photocatalyst layer with a metal, it is also possible to facilitate the generation of carriers and improve the photocatalytic effect. As the metal, Zn, Mo, Fe are preferable because they have a high photocatalytic-activity-enhancing effect. When Zn or Mo is used as the metal, the amount of the metal in the photocatalyst layer preferably is 0.1 to 1 mass%, and more preferably 0.2 to 0.5 mass%. When Fe is used as the metal, the amount of Fe in the photocatalyst layer preferably is 0.001 to 0.5 mass%. When the amount of the metal added is not less than the above-described lower limit, the effect produced by the doping can be provided. When the amount of the metal added is not greater than the upper limit, the possibility of decreasing the photocatalytic activity of the photocatalyst layer can be avoided sufficiently, the possibility of decreasing the photocatalytic activity being caused by the disorder of the crystal structure of the photocatalyst or the formation of recombination center, and both of he disorder of the crystal structure of the photocatalyst and the formation of recombination center being cause by the presence of the metal.

In the glass member of the present invention, both the crystalline undercoat layer and the photocatalyst layer preferably comprise at least one of a crystalline metal oxide and a crystalline metal oxynitride. Particularly, it is preferable that at least one of distances between oxygens in the crystals contained in the undercoat layer is similar to one of the distances between oxygens in the crystals contained in the photocatalyst layer. It seems that, by the combination of the crystalline undercoat layer and the photocatalyst layer for satisfying this condition, the oxygen atoms are shared when the photocatalyst layer is formed on the surface of the crystalline undercoat layer, and it makes it easy for the crystalline photocatalyst layer to grow continuously, and thus the formation of the dead layer is suppressed. In relation to the distance between oxygen atoms, for example, monoclinic zirconium oxide and anatase type titanium oxide are similar to each other in a certain portion (a range from 90 to 110%). Accordingly, when monoclinic zirconium oxide is selected as the material of the crystalline undercoat layer, the crystals of anatase type titanium oxide are easily formed on the surface thereof. As the crystalline undercoat layer, other than monoclinic zirconium oxide, it is preferable to use doped zirconium oxide or doped zirconium oxynitride with a small amount of nitrogen, tin, carbon or the like, for example. As the photocatalyst layer, other than anatase type titanium oxide, it is preferable to use doped titanium oxide or doped titanium oxynitride with a small amount of nitrogen, tin, carbon or the like, for example.

As for a monoclinic zirconium oxide layer which was mentioned as a preferable undercoat layer, as the electron diffraction image obtained by irradiating an electron beam from a direction perpendicular (normal direction) to the cross section of the layer, the diffraction image from the (111) plane or the (-111) plane is observed. The spacing of lattice planes of the (111) orientation is, for example, 0.26 to 0.30 nm, and the spacing of lattice planes of the (-111) orientation is, for example, 0.30 to 0.34 nm. With zirconium oxide whose spacing of lattice planes falls within this range, it is possible to sufficiently avoid an influence on the rapid crystal growth of the photocatalyst layer, the influence resulting from mismatching of lattice alignment of oxygen atoms on the oxide (e.g., titanium oxide, etc.) forming the photocatalyst layer, when there is displacement of oxygen atoms in the crystal plane due to a distortion in the crystal.

As for an anatase type titanium oxide layer which was mentioned as a preferable photocatalyst layer, as the electron diffraction image obtained by irradiating an electron beam from a direction perpendicular (normal direction) to the cross section of the layer, the diffraction image from the (101) plane is observed. The spacing of lattice planes of the (101) orientation is, for example, 0.33 to 0.37 nm. With titanium oxide whose spacing of lattice planes falls within this range, it is possible to sufficiently avoid an influence on the rapid crystal growth of the photocatalyst layer, the influence resulting from mismatching of lattice alignment of oxygen atoms on the oxide forming the crystalline undercoat layer, when there is displacement of oxygen atoms in the crystal plane due to a distortion in the crystal.

In the present invention, a low emissivity film is used as the heat reflecting layer, for example. The low emissivity film preferably is, but is not limited to, a multilayer laminate including a dielectric, silver, a dielectric, silver and a dielectric are laminated in this order (a constitution comprising a substrate/ a first dielectric layer/ a first silver layer/ a second dielectric layer/a second silver layer/ a third dielectric layer) formed by a well-known film forming method such as sputtering method. As the dielectrics, titanium oxide, zinc oxide, tin oxide, niobium oxide, tantalum oxide, silicon nitride, silicon oxynitride and the like can be used. The heat reflecting layer preferably has, but not limited to, a thickness of 110 to 230 nm, and more preferably 125 to 200 nm. Those skilled in the art can set the reflection chromaticity and visible light reflectance of the single plate as appropriate according to, for example, the thickness, material and layer structure of the heat reflecting layer.

As the method for producing the glass member of the present invention, for example, the following method can be used, but is not limited thereto. First, an antistripping layer is formed on one surface of a glass substrate. Subsequently, a crystalline undercoat layer is formed on the surface of the antistripping layer, after which a photocatalyst layer is formed on the surface of the crystalline undercoat layer. On the other surface of the glass substrate, a heat reflecting layer is formed.

As the method for forming the antistripping layer, any conventionally known method can be used such as sputtering method or vacuum deposition method.

As the method for forming the crystalline undercoat layer, any conventionally known method can be used such as a liquid phase method (e.g., sol-gel method, liquid phase precipitation method, etc.) or a vapor phase method (e.g., sputtering method, vacuum deposition method, CVD method, etc.). By using these methods, a crystallinity-enhancing effect of the photocatalyst layer produced by the crystalline undercoat layer can be obtained. Particularly, it is preferable to use a vapor phase method because an excellent crystal-growth effect can be obtained. The method for forming the photocatalyst layer is not specifically limited, either, and any one of those listed for the method for forming the crystalline undercoat layer can be used. Particularly, it is preferable to use the vapor phase method.

The method for forming the heat reflecting layer is not specifically limited, and any conventionally known method can be used such as sputtering method.

The thicknesses of the glass substrate, antistripping layer, crystalline undercoat layer, photocatalyst layer and heat reflecting layer of the present invetnion can be controlled by conventionally known methods.

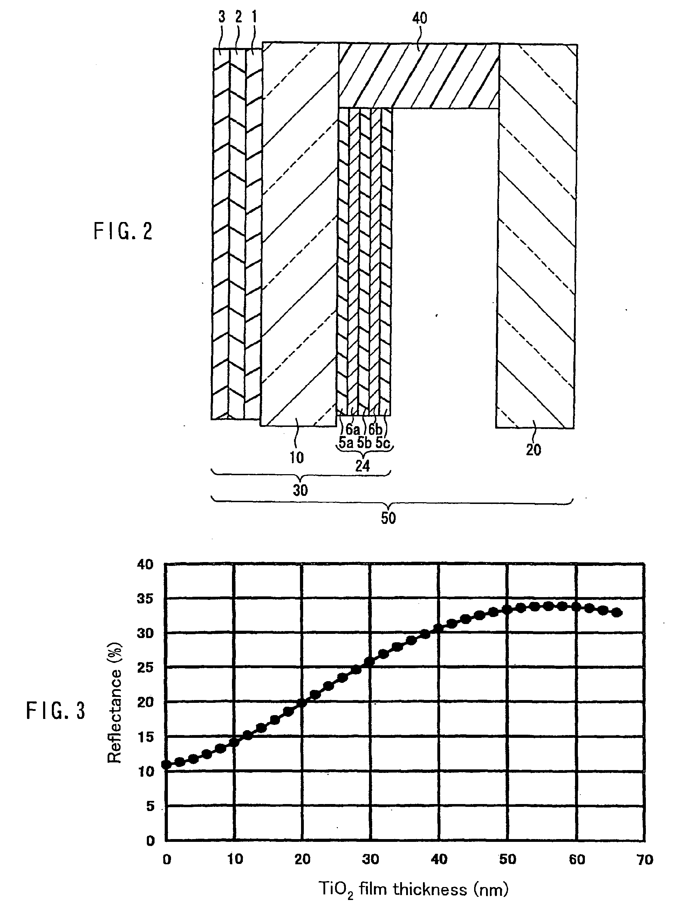

An example of the double paned glass of the present invetnion will be described with reference to FIG. 2. As long as the double paned glass of the present invention includes the glass member of the present inventin, there is no other limitation on the constitution.

FIG. 2 is a cross sectional view showing an example of double paned glass of the present invention. The same reference numbers are given to the same components of FIG. 1. In double paned glass 50, a glass plate 20 and a glass member 30 are placed with a spacer 40 placed therebetween so as to create a space between the facing surfaces of the glass plate 20 and the glass member 30. The glass member 30 is placed such that its photocatalyst layer 3 serves as one of the outermost layers of the double paned glass 50. In this diagram, a heat reflecting layer 24 is a low emissivity film comprising a dielectric 5a/ silver 6a/ a dielectric 5b/ silver 6b/ a dielectric 5c, but that constitution is not limiting. Such double paned glass 50 is usually installed such that the surface having the glass member 30 thereon (specifically, the surface of the photocatalyst layer 3) faces the outdoor side and another glass plate 20 faces the indoor side.

In the double paned glass of the present invention, there is no specific limitation on another glass plate different from the glass member of the present invention (hereinafter referred to as an "indoor side glass plate"), and any one of the glass plates listed above can be used. The thickness is not specifically limited, either, and the indoor side glass plate can have a thickness described above. The spacer is not specifically limited, either, and any conventionally known spacer can be used. The space between the glass member and the indoor side glass plate created by the spacer may be a hollow cavity or it may be filled with a material.

In the double paned glass of the present invetnion, the distance of the space between the glass member and the indoor side glass plate preferably is, but is not limited to, 6 to 18 mm.

The method for producing the double paned glass including the glass member of the present invention is not specifically limited, and any conventionally known method can be used.

### Example 1

According to the following method, a glass member as shown in FIG. 1 was produced, and using the glass member, double paned glass as shown in FIG. 2 was produced.

### (Method for producing double paned glass)

A heat reflecting layer 24 was formed,on one surface of a glass substrate 10 (length: 10 cm, width: 10 cm, thickness: 3 mm). As the heat reflecting layer 24, a low emissivity film (Low-E film; thickness: 161 nm) comprising a dielectric 5a/ silver 6a/ a dielectric 5b/ silver 6b/ a dielectric 5c was formed such that, in a single plate comprising the glass plate 10 and the heat reflecting layer 24, the glass substrate side surface had the following optical properties: a reflection chromaticity (a*, b*) satisfying -4≤a*≤2 and -5≤b*≤0 and a visible light reflectance of 10% or less.

The specific constitution of the heat reflecting layer 24 was as follows: a glass substrate/ zinc oxide (16.1 nm)/ silver (9.7 nm)/ titanium oxide (2.6 nm)/ zinc oxide (23.3 nm)/ silicon nitride (10.2 nm)/ zinc oxide (12.7 nm)/silicon nitride (9.4 nm)/ zinc oxide (22.3 nm)/ silver (12.0 nm)/ titanium oxide (2.6 nm)/ zinc oxide (29.9 nm)/ silicon nitride (10.4 nm).

Each layer of the heat reflecting layer 24 was formed by the following method. The titanium oxide layers and the zinc oxide layers were formed by a reactive sputtering method using titanium and zinc, respectively, as a metal target and a mixed gas of an argon gas and an oxygen gas as a discharge gas. The silicon nitride layers were formed by a reactive sputtering method using a Si target and a mixed gas of an argon gas and a nitrogen gas as a discharge gas. The silver layers were formed by a sputtering method using a silver target and an argon gas as a discharge gas. As the discharge power source, a direct current pulse power source was used.

The optical properties of the single plate comprising the glass substrate 10 and the heat reflecting layer 24 were measured, and the results were as follows.
Reflection chromaticity viewing from glass substrate 10 side (a*, b*) = (-0.21, -3.63)
Visible light reflectance viewing from glass substrate 10 side 5.6%
Reflection chromaticity viewing from heat reflecting layer 24 side (a*, b*) = (-3.81, 3.54)
Visible light reflectance viewing from heat reflecting layer 24 side 4.4%

On the other surface of the glass substrate 10, an amorphous silicon oxide (SiO₂) layer was formed as an antistripping layer 1 by reactive sputtering method. Subsequently, on the surface of the antistripping layer 1, a monoclinic zirconium oxide (ZrO₂) layer was formed as a crystalline undercoat layer 2 by a reactive sputtering method. On the surface of the crystalline undercoat layer 2, an anatase type titanium oxide (TiO₂) layer was formed as a photocatalyst layer 3 by a sputtering method. Thereby, a glass member 30 was produced.

The obtained glass member 30 and an indoor side glass plate 20 (thickness: 3 mm) were placed with a spacer (thickness: 12 mm) placed therebetween so as to create a space between the facing surfaces of the glass member 30 and the indoor side glass plate 20. Thereby, double paned glass 50 was produced.

### (Changing of thickness of photocatalyst layer)

Double paned glasses were produced in the same method as described above, except that the thickness of the photocatalyst layer was changed at a pitch of 2 nm, the thickness of the antistripping layer 1 (SiO₂ layer) was set to 10 nm and the thickness of the crystalline undercoat layer 2 (ZrO₂ layer) was set to 5 nm.

### (Changing of thickness of crystalline undercoat layer)

Double paned glasses were produced in the same method as described above, except that the thickness of the crystalline undercoat layer was changed at a pitch of 2 nm, the thickness of the antistripping layer 1 (SiO₂ layer) was set to 10 nm and the thickness of the photocatalyst layer 3 (TiO₂ layer) was set to 5 nm.

### (Measurement of visible light reflectance)

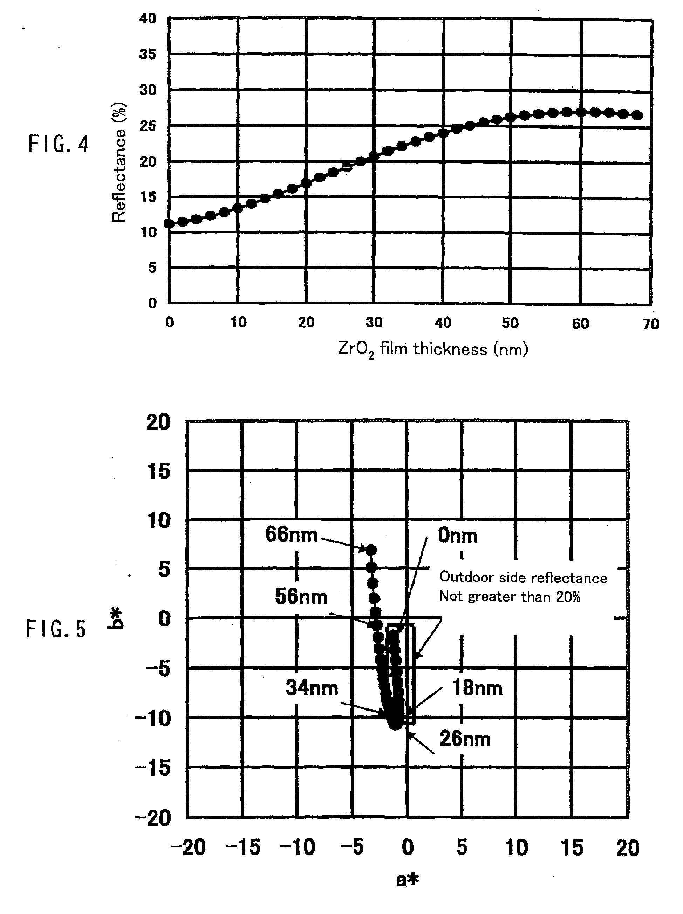

For each of the double paned glass 50 obtained in the manner described above, the visible light reflectance (R%) of the photocatalyst layer 3 side surface was measured according to JIS R3106. The results are shown in FIGS. 3 and 4. FIG. 3 is a graph showing the thickness of the photocatalyst layer 3 versus the visible light reflectance. FIG. 4 is a graph showing the thickness of the crystalline undercoat layer 2 versus the visible light reflectance. The results indicate that the visible light reflectance was high when the photocatalyst layer 3 and the crystalline undercoat layer 2 each had a thickness within a range of 40 to 60 nm, and the visible light reflectance was low when the thickness was out of this range. The visible light reflectance (R%) preferably is 20% or less, and more preferably 17.5 % or less.

### (Measurement of reflection chromaticity of double paned glass)

For the double paned glasses obtained in the manner described above, changes in the reflection chromaticity (a*, b*) of the photocatalyst layer 3 side surface were measured. The reflection chromaticity was calculated according to JIS Z8729 using a spectrum obtained by a spectrophotometer.

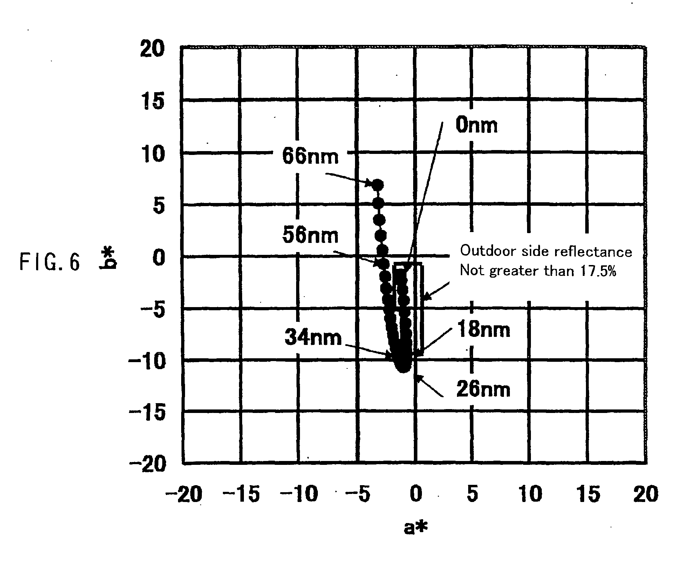

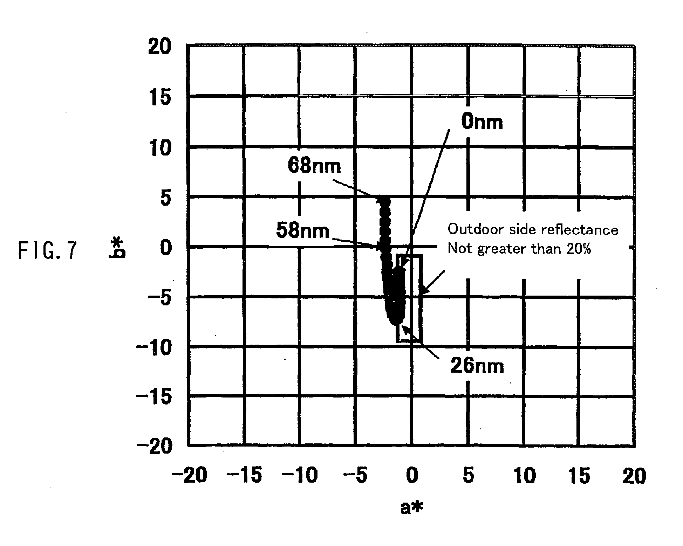

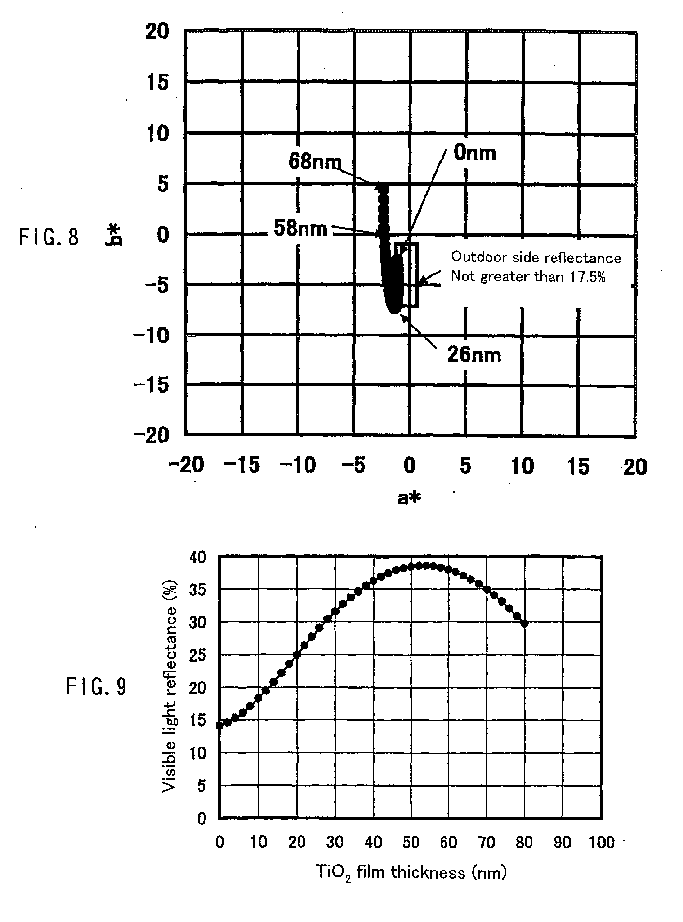

The results of the obtained reflection chromaticity (a*, b*) are shown in FIGS. 5 to 8. FIGS. 5 and 6 are graphs showing the reflection chromaticity (a*, b*) of the double paned glass having various photocatalyst layer thickness. In FIG. 5, based on the results of FIG. 3, a range indicating a visible light reflectance of 20% or less is surrounded by a rectangular frame, and in FIG. 6, based on the results of FIG. 3, a range indicating a visible light reflectance of 17.5% or less is surrounded by a rectangular frame. FIGS. 7 and 8 are graphs showing the reflection chromaticity (a*, b*) of the double paned glasses having various crystalline undercoat layer thickness. In FIG. 7, based on the results of FIG. 4, a range indicating a visible light reflectance of 20% or less is surrounded by a rectangular frame, and in FIG. 8, based on the results of FIG. 4, a range indicating a visible light reflectance of 17.5% or less is surrounded by a rectangular frame.

### (Measurement of photocatalystic activity)

For the double paned glass 50 obtained in the manner described above, evaluations were made in terms of photocatalytic activity by the following method. First, UV irradiation was performed for 60 minutes under the conditions that a black lamp (center wavelength: 365 nm) was used as a light source and the luminance was set to 1 mW/cm², and then the contact angle (θ) of water was measured. More specifically, a UV light was irradiated to the photocatalyst layer side surface of the double paned glass under the above conditions. Thereafter, the double paned glass was placed on a horizontal table such that the surface of the photocatalyst layer was horizontal, and 0.4 µL of water was dropped to the surface of the photocatalyst layer. Then, the contact angle of the water droplet on the surface was measured using a contact angle meter (CA-150 available from Kyowa Interface Science Co., Ltd.). For the double paned glass that exhibited a contact angle (θ) of not greater than 15 degrees and not greater than 20 degrees, the thickness of the crystalline undercoat layer 2 and that of the photocatalyst layer 3 were determined.

The above measurement results are shown in Table 1 given below.
In Table 1 given below, the reflection chromaticity -5<a*<0, -12<b*<0 is a range where a pale blue reflection color is observed, and the reflection chromaticity -5<a*<0, -8<b*<0 is a range where light pale blue reflection color is observed.

**Table 1**

| | | Thickness of crystalline undercoat layer 2 | Thickness of photocatalyst layer 3 |
|---|---|---|---|
| Reflection chromaticity (a*, b*) | (1) -5<a*<0 -12<b*<0 | 0 to 58nm | 0 to 56 nm |
| | (2) -5<a*<0 -8<b*<0 | 0 to 58 nm | 0 to 12 nm |
| Visible light reflectance (R) | (3) Not greater than 20% | 0 to 28 nm | 0 to 20 nm |
| | (4) Not greater than 17.5% | 0 to 20 nm | 0 to 16 nm |
| Contact angle of water (θ) | (5) Not greater than 20 degrees | Not less than 2 nm | Not less than 2 nm |
| | (6) Not greater than 15 degrees | Not less than 3 nm | Not less than 3 nm |
| Range satisfying (1), (3) and (5) (Preferable range) | | 2 to 28 nm 2 to 28 nm | 2 to 20 nm 2 to 20 nm |
| Range satisfying (2), (4) and (6) (More preferable range) | | 3 to 20 nm 3 to 20 nm | 3 to 12 nm 3 to 12 um |

The results of Table 1 given above indicate that, in this example, double paned glass having excellent photocatalytic activity while achieving both excellent visible light reflectance and excellent reflection chromaticity is obtained by setting the thickness of the crystalline undercoat layer 2 in the range of 2 to 28 nm and the thickness of the photocatalyst layer 3 in the range of 2 to 20 nm. Further, they indicate that, by setting the thickness of the crystalline undercoat layer 2 in the range of 3 to 20 nm and the thickness of the photocatalyst layer 3 in the range of 3 to 12 nm, further excellent photocatalytic activity, furhter excellent visible light reflectance, and a colorless or pale blue reflection color tone can be also achieved.

### Example 2

A glass member 30 having a structure similar to that of Example 1 was produced in the same manner as in Example 1 except that the specific film constitution of the heat reflecting layer 24 was changed. Using the produced glass member 30, double paned glass 50 similar to that of FIG. 2 was produced.

### (Method for producing double paned glass)

In the same manner as in Example 1, a heat reflecting layer 24 was produced on one surface of a glass substrate 10. The optical properties of a single plate comprising the glass substrate 10 and the heat reflecting layer 24 were set such that the glass substrate side surface had a reflection chromaticity (a*, b*) satisfying -15≤a*≤-2 and -10≤b*≤10 and a visible light reflectance of 13% or less. The thickness of the low emissivity film was set to 148 mm.

The specific constitution of the heat reflecting layer 24 was as follows: a glass substrate/ zinc oxide (17.2 nm)/ silver (7.7 nm)/ titanium oxide (3.4 nm)/ zinc oxide (20.4 nm)/ silicon nitride (8.1 nm)/ zinc oxide (16.4 nm)/ silicon nitride (12.3 nm)/ zinc oxide (21.9 nm)/ silver (11.3 nm)/ titanium oxide (2.9 nm)/ zinc oxide (20.2 nm)/ silicon nitride (8.6 nm).

The optical properties of the single plate comprising the glass substrate 10 and the heat reflecting layer 24 were measured, and the results were as follows.
Reflection chromaticity viewing from glass substrate 10 side (a*, b*) = (-7.69, 7.12)
Visible light reflectance viewing from glass substrate 10 side 9.0%
Reflection chromaticity viewing from heat reflecting layer 24 side (a*, b*) = (-11.2, 18.6)
Visible light reflectance viewing from heat reflecting layer 24 side 8.9%

Similarly to Example 1, double paned glass was produced by changing the thickness of the photocatalyst layer and that of the crystalline undercoat layer, and the visible light reflectance and reflection chromaticity of the photocatalyst layer 3 side surface were measured in the same manner as in Example 1. The photocatalytic activity was also measured in the same manner as in Example 1.

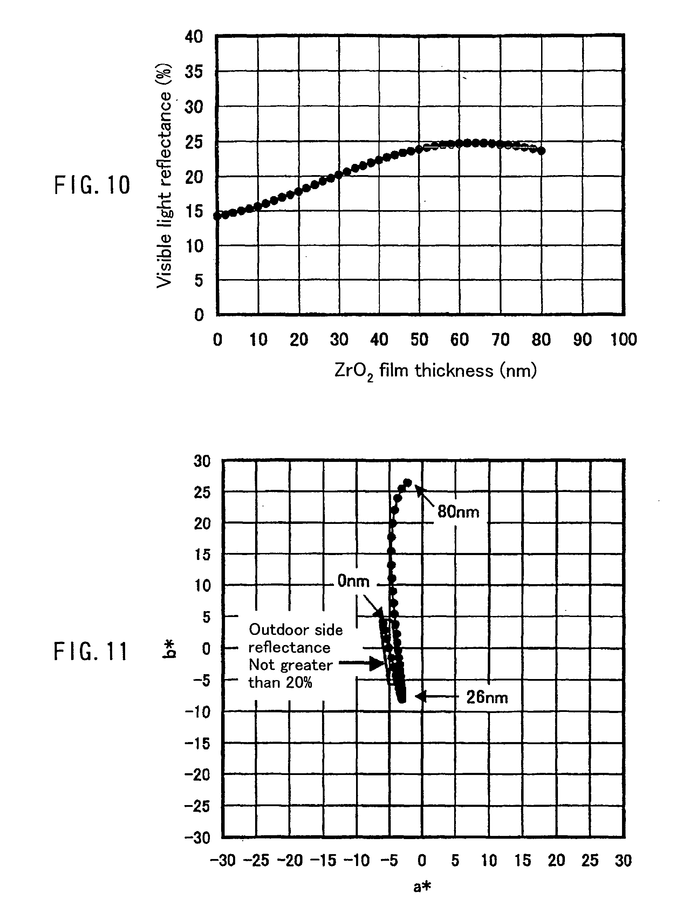

The measurement results of the measured photocatalyst layer 3 side visible light reflectance are shown in FIGS. 9 and 10. FIG. 9 is a graph showing the thickness of the photocatalyst layer 3 versus the visible light reflectance. FIG. 10 is a graph showing the thickness of the crystalline undercoat layer 2 and the visible light reflectance. The results indicate that the visible light reflectance was high when the photocatalyst layer 3 and the crystalline undercoat layer 2 each had a thickness within a range of 40 to 60 nm, and the visible light reflectance was low when the thickness was out of this range. The visible light reflectance (R%) preferably is 20% or less, and more preferably 17.5 % or less.

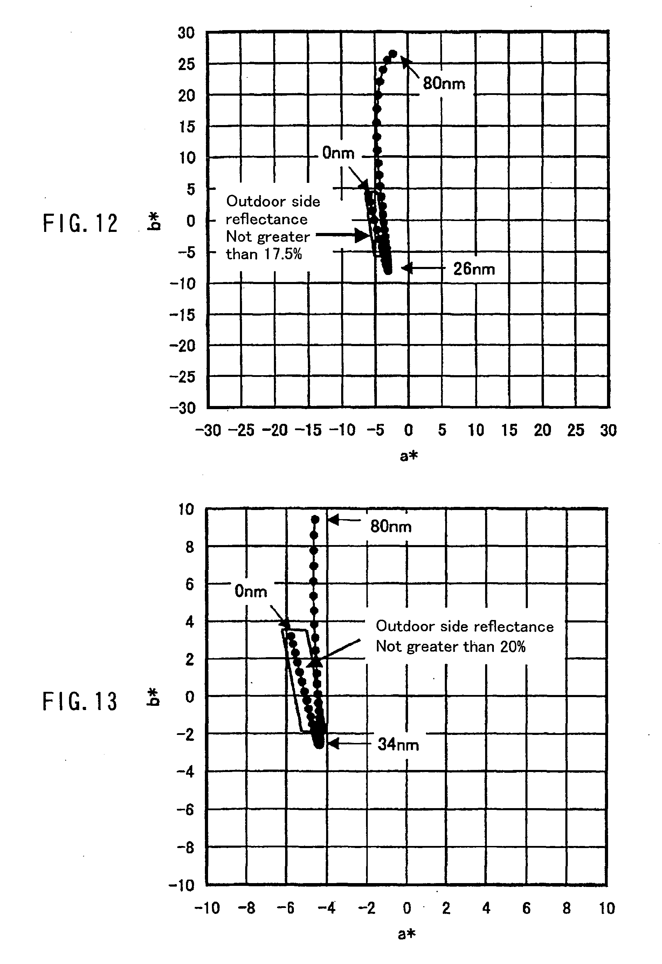

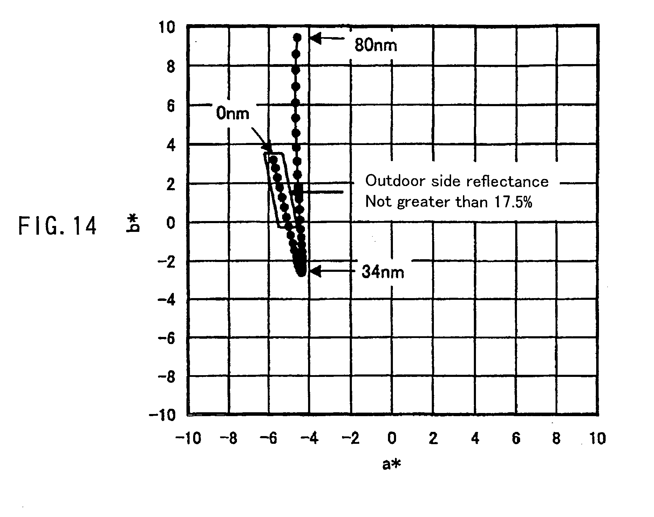

The measurement results of the photocatalyst layer 3 side reflection chromaticity (a*, b*) measured in the same manner as in Example 1 are shown in FIGS. 11 to 14. FIGS. 11 and 12 are graphs showing the reflection chromaticity (a*, b*) of the double paned glass having various photocatalyst layer thickness. In FIG. 11, based on the results of FIG. 9, a range indicating a visible light reflectance of 20% or less is surrounded by a rectangular frame, and in FIG. 12, based on the results of FIG. 9, a range indicating a visible light reflectance of 17.5% or less is surrounded by a rectangular frame. FIGS. 13 and 14 are graphs showing the reflection chromaticity (a*, b*) of the double paned glass having various crystalline undercoat layer thickness. In FIG. 13, based on the results of FIG. 10, a range indicating a visible light reflectance of 20% or less is surrounded by a rectangular frame, and in FIG. 14, based on the results of FIG. 10, a range indicating a visible light reflectance of 17.5% or less is surrounded by a rectangular frame.

The above measurement results are shown in Table 2 given below. The reflection color tone of the double paned glass of this example preferably is from bluish green to green. Particularly preferable range of reflection color tone is -12<a*<2, -10<b*<5, and more preferable range of reflection color tone is -9<a*<-3.7, -10<b*<4.

**Table 2**

| | | Thickness of crystalline undercoat layer 2 | Thickness of photocatalyst layer 3 |
|---|---|---|---|
| Reflection chromaticity (a*, b*) | (1) -12<a*<-2 -10<b*<4 | 0 to 68 nm | 0 to 56 nm |
| | (2) -9<a*<-3.7 -10<b*<4 | 0 to 66 nm | 0 to 16 nm |
| Visible light reflectance (R) | (3) Not greater than 20% | 0 to 28 nm | 0 to 14 nm |
| | (4) Not greater than 17.5% | 0 to 18 nm | 0 to 8 nm |
| Contact angle of water (θ) | (5) Not greater than 20 degrees | Not less than 2 nm | Not less than 2 nm |
| | (6) Not greater than 15 degrees | Not less than 3 nm | Not less than 3 nm |
| Range satisfying (1), (3) and (5) (Preferable range) | | 2 to 28 nm | 2 to 14 nm |
| Range satisfying (2), (4) and (6) (More preferable range) | | 3 to 18 nm | 3 to 8 nm |

The results of Table 2 given above indicate that, in this example, double paned glass having excellent photocatalytic activity while achieving both excellent visible light reflectance and excellent reflection chromaticity is obtained by setting the thickness of the crystalline undercoat layer 2 in the range of 2 to 28 nm and the thickness of the photocatalyst layer 3 in the range of 2 to 14 nm. Further, they indicate that, by setting the thickness of the crystalline undercoat layer 2 in the range of 3 to 18 nm and the thickness of the photocatalyst layer 3 in the range of 3 to 8 nm, further excellent photocatalytic activity, furhter excellent visible light reflectance, and a blulish green or green reflection color tone can also be achieved.

### Example 3

Double paned glass 50 was produced in the same manner as in Example 1 except that the thicknesses of the antistripping layer 1, the crystalline undercoat layer 2 and the photocatalyst layer 3 were set to 10 nm, 5 nm and 5 nm, respectively. Then, this double paned glass was subjected to measurement for chromaticity of transmitted light (transmission chromaticity), reflection chromaticity (of the photocatalyst layer 3 side surface and the indoor side glass plate 20 side surface), visible light transmittance, visible light reflectance, solar transmittance and solar heat gain coefficient. The visible light reflectance, transmission chromaticity and reflection chromaticity were measured in the same manner as in Example 1. The visible light transmittance and solar transmittance were measured according to JIS R3106. The solar heat gain coefficient was calculated according to JIS R3106 using a spectrum obtained by a spectrophotometer.

### Example 4

Double paned glass was produced and measured in the same manner as in Example 3 except that the thickness of the antistripping layer 1, the crystalline undercoat layer 2 and the photocatalyst layer 3 were set to 10 nm, 10 nm and 5 nm, respectively.

### Example 5

Double paned glass was produced and measured in the same manner as in Example 3 except that the thickness of the antistripping layer 1, the crystalline undercoat layer 2 and the photocatalyst layer 3 were set to 10 nm.

### Comparative Example 1

Double paned glass was produced in the same manner as in Example 1 except that an antistripping layer, a crystalline undercoat layer and a photocatalyst layer were not formed and only a heat reflecting layer was laminated on a glass substrate. Then, the double paned glass was subjected to the same measurements as in Example 5.

The measurement results of Examples 3 to 5 and Comparative Example 1 are shown in Table 3 given below.

**Table 3**

| | Transmission chromaticity | | Reflection chromaticity | | | | Visible light transmittance (%) |
|---|---|---|---|---|---|---|---|
| | | | Photocatalyst layer side (Outdoor side) | | Glass plate side (Indoor side) | | |
| | a* | b* | a* | b* | a* | b* | |
| Ex. 3 | -2.80 | 3.25 | -1.07 | -3.78 | -2.31 | -0.27 | 71.1 |
| Ex. 4 | -2.77 | 3.72 | -1.04 | -5.14 | -2.48 | -1.12 | 70.0 |
| Ex. 5 | -2.74 | 4.74 | -0.89 | -7.55 | -2.68 | -2.73 | 68.1 |
| Comp. Ex. 1 | -2.77 | 2.63 | -1.36 | -1.47 | -2.30 | 1.12 | 72.1 |

| | Visible light reflectance (%) | | Solar transmittance (%) | | Solar heat gain coefficient (%) | | |
|---|---|---|---|---|---|---|---|
| | Photocatalyst layer side (Outdoor side) | Glass plate side (Indoor side) | (300 to 2500 nm) | | Summer | Winter | |
| Ex. 3 | 12.0 | 12.6 | 37.6 | | 41.4 | 40.9 | |
| Ex. 4 | 13.4 | 13.5 | 37.0 | | 40.8 | 40.3 | |
| Ex. 5 | 15.8 | 15.1 | 35.5 | | 39.2 | 38.7 | |
| Comp. Ex. 1 | 10.8 | 11.8 | 38.2 | | 42.1 | 41.7 | |

The results of Table 3 indicate that the solar heat gain coefficient is increased by forming an antistripping layer 1, a crystalline undercoat layer 2 and a photocatalyst layer 3 on the other surface of a glass substrate only having a heat reflecting layer thereon. The smaller the value of solar heat gain coefficient, the greater the ability to reduce the amount of heat of sunlight transferred indoors, and effects such as an improvement in cooling efficiency in the summer can be obtained.

### Example 6

Double paned glass was produced in the same manner as in Example 3 except that each of the heat reflecting layers listed in Table 4 given below was laminated on a glass substrate, and the thicknesses of the antistripping layer 1, the crystalline undercoat layer 2 and the photocatalyst layer 3 were set to 10 nm, 10 nm and 5 nm, respectively. Then, the optical properties of the double paned glass was measured in the same manner as in Example 3.

Each heat reflecting layer was formed by forming a first dielectric layer, a first silver layer, a second dielectric layer, a second silver layer and a third dielectric layer on a surface of a glass substrate. Table 4 shows the materials of the layers forming each heat reflecting layer. Table 5 shows the thicknesses of the layers forming each heat reflecting layer. Table 6 shows the optical thicknesses at a wavelength of 530 nm of the dielectric layers and the silver layers. The thickness of Table 5 is a physical thickness obtained by measuring the cross section of a layer using a transmission electron microscope (EM002B transmission electron microscope available from TOPCON CORPORATION). The optical thickness of Table 6 is a value obtained by mutiplying the physical thickness by a refractive index at 530 nm. The refractive index was determined from the measurement results obtained using a spectral ellipsometer (VASE system available from J. A. Woollam Co., Inc., the United States).

**Table 4**

| | First dielectric layer material | First silver layer material | Second dielectric layer material | | | | | | Second silver layer material | Third dielectric layer material | | |
|---|---|---|---|---|---|---|---|---|---|---|---|---|
| Sample 6 | Zinc oxide | Silver | Niobium oxide | Tin doped zinc oxide | Silicon nitride | Tin doped zinc oxide | Silicon nitride | Zinc oxide Zinc oxide | Silver | Niobium oxide | Tin doped zinc oxide | Silicon nitride |
| Sample 7 | Zinc oxide | Silver | Titanium oxide | Zinc oxide | Silicon nitride | Zinc oxide | Silicon nitride | Zinc oxide | Silver | Titanium oxide | Zinc oxide | Silicon nitride |
| Sample 8 | Zinc oxide | Silver | Titanium oxide | Zinc oxide | Silicon nitride | Zinc oxide | Silicon nitride | Zinc oxide | Silver | Titanium oxide | Zinc oxide | Silicon nitride |
| Sample 9 | Zinc oxide | Silver | Niobium oxide | Tin doped | Silicon | Tin doped | Silicon | Zinc oxide | Silver | Niobium oxide | Tin doped | Silicon nitride |
| Sample 10 | Zinc oxide | Silver | Niobium oxide | Zinc oxide | Silicon nitride | Zinc oxide | Silicon nitride | Zinc oxide | Silver | Titanium oxide | Tin doped zinc oxide | Silicon nitride |
| Sample 11 | Zinc oxide | Silver | Niobium oxide | Tin doped zinc oxide | Silicon nitride | Tin doped zinc oxide | Silicon nitride | Zinc oxide | Silver | Niobium oxide | Tin doped zinc oxide | Silicon nitride |
| Sample 12 | oxide | Silver | oxide | Tin zinc oxide | Silicon nitride | oxide | nitride | Zinc oxide | Silver | oxide | Tin zinc oxide | Silicon nitride |
| Sample 13 | Zinc oxide | Silver | Titanium oxide | Zinc oxide | Silicon nitride | Zinc oxide | Silicon nitride | Zinc oxide | Silver | Titanium oxide | Zinc oxide | Silicon nitride |
| Sample 14 | Zinc oxide | Silver | Niobium oxide | Tin doped zinc oxide | Silicon nitride | Tin doped zinc oxide | Silicon nitride | Zinc oxide | Silver | Niobium oxide | Tin doped zinc oxide | Silicon nitride |
| Sample 15 | Zinc oxide | Silver | Titanium | Zinc oxide | Silicon nitride | Zinc oxide | Silicon nitride | Zinc oxide | Silver | Titanium oxide | Zinc oxide | Silicon nitride |
| Sample 16 | Zinc oxide | Silver | oxide | Zinc oxide | Silicon nitride | Zinc oxide | Silicon nitride | Zinc oxide | Silver | Titanium oxide | Zinc oxide | Silicon nitride |
| Sample 17 | Zinc oxide | Silver | Titanium oxide | Tin doped | Silicon | Tin doped | Silicon | Zinc oxide | Silver | Titanium oxide | Tin doped | Silicon nitride |
| Sample 18 | Zinc oxide | Silver | Niobium oxide | Tin doped | Silicon | Tin doped | Silicon | Zinc oxide | Silver | Niobium oxide | Tin doped | Silicon nitride |
| Sample 19 | Zinc oxide | Silver | Titanium oxide | Zinc oxide | Silicon nitride | Zinc oxide | Silicon nitride | Zinc oxide | Silver | Titanium oxide | Zinc oxide | Silicon nitride |
| Sample 20 | Zinc oxide | Silver | Titanium oxide | Zinc oxide | Silicon nitride | Zinc oxide | Silicon nitride | Zinc oxide | Silver | Titanium oxide | Zinc oxide | Silicon nitride |

**Table 5**

| | First dielectric layer thickness (nm) | First silver layer thickness (nm) | Second dielectric layer thickness (nm) | | | | | | Second silver layer thickness (nm) | Third dielectric layer thickness (nm) | | |
|---|---|---|---|---|---|---|---|---|---|---|---|---|
| Sample 6 | 23.2 | 7.7 | 4.0 | 21.3 | 8.8 | 18.5 | 12.8 | 22.6 | 11.3 | 3.7 | 18.8 | 9.5 |
| Sample 7 | 20.9 | 7.7 | 3.5 | 21.0 | 8.2 | 18.1 | 12.4 | 22.2 | 11.3 | 3.7 | 19.1 | 9.2 |
| Sample 8 | 14.2 | 7.7 | 4.0 | 19.2 | 7.5 | 14.9 | 10.6 | 20.7 | 11.3 | 2.0 | 23.9 | 9.6 |
| Sample 9 | 10.8 | 7.7 | 4.0 | 20.3 | 7.1 | 15.6 | 11.3 | 21.8 | 11.3 | 2.0 | 25.3 | 8.0 |
| Sample 10 | 10.8 | 7.7 | 4.0 | 21.4 | 7.1 | 15.5 | 11.3 | 21.8 | 11.3 | 2.0 | 25.3 | 8.0 |
| Sample 11 | 12.1 | 7.7 | 2.8 | 18.3 | 7.3 | 9.3 | 9.5 | 20.3 | 11.3 | 2.0 | 15.8 | 8.1 |
| Sample 12 | 12.1 | 7.7 | 4.0 | 18.3 | 7.3 | 4.7 | 9.5 | 20.3 | 11.3 | 2.0 | 15.8 | 8.1 |
| Sample 13 | 11.1 | 7.7 | 2.7 | 18.2 | 7.6 | 7.4 | 9.6 | 20.6 | 11.3 | 2.1 | 15.4 | 8.3 |
| Sample 14 | 20.2 | 7.7 | 3.4 | 20.4 | 8.0 | 15.3 | 12.0 | 21.8 | 11.3 | 3.7 | 17.3 | 8.5 |
| Sample 15 | 17.1 | 7.7 | 2.7 | 20.1 | 7.5 | 16.0 | 11.7 | 21.4 | 11.3 | 3.4 | 18.6 | 8.1 |
| Sample 16 | 16.2 | 7.7 | 3.4 | 20.5 | 8.1 | 16.5 | 12.3 | 22.0 | 11.3 | 2.9 | 20.7 | 8.7 |
| Sample 17 | 16.2 | 7.7 | 3.4 | 20.8 | 8.1 | 16.7 | 12.3 | 22.0 | 11.3 | 2.9 | 20.9 | 8.7 |
| Sample 18 | 16.2 | 7.7 | 3.6 | 20.8 | 8.1 | 16.7 | 12.3 | 22.0 | 11.3 | 3.0 | 20.9 | 8.7 |
| Sample 19 | 28.3 | 10.9 | 4.0 | 19.3 | 8.4 | 2.1 | 8.7 | 20.9 | 8.5 | 1.7 | 21.0 | 9.0 |
| Sample 20 | 12.4 | 9.7 | 4.0 | 20.8 | 8.0 | 19.1 | 12.1 | 22.2 | 12.0 | 2.0 | 25.5 | 9.8 |

**Table 6**

| | First dielectric layer optical thickness (nm) | First silver layer optical thickness (nm) | Second dielectric layer optical thickness (nm) | Second silver layer optical thickness (nm) | Third dielectric layer optical thickness (nm) |
|---|---|---|---|---|---|
| Sample 6 | 46.4 | 1.1 | 177.2 | 1.6 | 65.1 |
| Sample 7 | 41.7 | 1.1 | 173.5 | 1.6 | 66.1 |
| Sample 8 | 28.4 | 1.1 | 156.1 | 1.6 | 72.2 |
| Sample 9 | 21.5 | 1.1 | 161.4 | 1.6 | 71.1 |
| Sample 10 | 21.5 | 1.1 | 164.3 | 1.6 | 71.3 |
| Sample 11 | 24.2 | 1.1 | 135.9 | 1.6 | 52.3 |
| Sample 12 | 24.2 | 1.1 | 132.1 | 1.6 | 52.3 |
| Sample 13 | 22.3 | 1.1 | 134.3 | 1.6 | 52.8 |
| Sample 14 | 40.4 | 1.1 | 162.8 | 1.6 | 60.1 |
| Sample 15 | 34.1 | 1.1 | 160.5 | 1.6 | 62.0 |
| Sample 16 | 32.4 | 1.1 | 168.0 | 1.6 | 66.1 |
| Sample 17 | 32.4 | 1.1 | 168.0 | 1.6 | 66.1 |
| Sample 18 | 32.4 | 1.1 | 168.0 | 1.6 | 66.1 |
| Sample 19 | 56.5 | 1.5 | 129.0 | 1.2 | 64.5 |
| Sample 20 | 24.8 | 1.4 | 174.8 | 1.7 | 75.8 |

The measurement results of the reflection chromaticity of the glass substrate side of the single plate, the transmission chromaticity of the double paned glass, the reflection chromaticity of the indoor side surface of the double paned glass and that of the outdoor side surface of the same are shown in Table 7. Likewise, the measurement results of the visible light reflectance of the glass substrate side of the single plate, the visible light transmittance of the double paned glass, the visible light reflectance of the indoor side surface of the double paned glass and that of the outdoor side surface of the same are shown in Table 8.

**Table 7**

| | Single plate (glass surface side) Reflected light chromaticity | | Double paned glass Transmitted light chromaticity | | Double paned glass (outdoor side) Reflected light chromaticity | | Double paned glass (indoor side) Reflected light chromaticity | |
|---|---|---|---|---|---|---|---|---|
| | a* | b* | a* | b* | a* | b* | a* | b* |
| Sample 6 | -5.0 | 9.2 | -2.1 | -0.3 | -3.7 | 1.6 | -4.0 | 7.2 |
| Sample 7 | -5.0 | 9.2 | -2.0 | 0.2 | -3.7 | 1.8 | -4.9 | 7.0 |
| Sample 8 | -3.2 | 0.0 | -2.6 | 1.5 | -2.6 | -3.5 | -4.9 | 1.0 |
| Sample 9 | -3.9 | -1.8 | -2.4 | 1.2 | -3.1 | -4.5 | -5.7 | 1.8 |
| Sample 10 | -3.8 | -1.2 | -2.4 | 1.5 | -3.0 | -4.0 | -5.9 | 2.9 |
| Sample 11 | -12.0 | -5.0 | -1.9 | 0.7 | -7.7 | -6.7 | -6.6 | -3.9 |
| Sample 12 | -12.2 | -6.3 | -1.8 | 0.9 | -7.8 | -7.4 | -6.9 | -4.4 |
| Sample 13 | -12.0 | -5.0 | -1.3 | 1.3 | -8.9 | -5.5 | -8.2 | -3.6 |
| Sample 14 | -12.0 | 9.2 | -1.3 | -0.5 | -7.9 | 1.4 | -7.7 | 5.8 |
| Sample 15 | -12.0 | 9.2 | -1.1 | 0.1 | -7.7 | 1.6 | -8.6 | 5.4 |
| Sample 16 | -7.7 | 7.1 | -1.8 | 0.9 | -5.2 | 0.7 | -6.5 | 6.2 |
| Sample 17 | -7.0 | 4.9 | -1.9 | 0.1 | -5.0 | -0.6 | -6.1 | 5.5 |
| Sample 18 | -7.3 | 4.7 | -1.8 | 0.2 | -5.1 | -0.7 | -6.3 | 5.5 |
| Sample 19 | -7.4 | 7.3 | -1.8 | 1.1 | -5.2 | 1.3 | -6.3 | -4.6 |
| Sample 20 | 0.3 | -4.7 | -3.1 | 2.4 | -0.6 | -5.6 | -4.5 | 1.2 |

**Table 8**

| | Single plate (glass surface side) Visible light reflectance (%) | Double paned glass Visible light transmittance (%) | Double paned glass (outdoor side) Visible light reflectance (%) | Double paned glass (indoor side) Visible light reflectance (%) |
|---|---|---|---|---|
| Sample 6 | 9.3 | 65.2 | 15.7 | 16.5 |
| Sample 7 | 9.2 | 68.2 | 15.9 | 16.8 |
| Sample 8 | 7.0 | 69.8 | 14.1 | 14.4 |
| Sample 9 | 8.3 | 65.7 | 14.7 | 15.0 |
| Sample 10 | 7.8 | 67.7 | 14.5 | 15.4 |
| Sample 11 | 7.3 | 65.9 | 13.8 | 15.0 |
| Sample 12 | 7.5 | 66.5 | 14.1 | 15.4 |
| Sample 13 | 7.3 | 68.1 | 14.6 | 15.7 |
| Sample 14 | 9.0 | 65.3 | 15.4 | 16.5 |
| Sample 15 | 9.0 | 68.0 | 15.8 | 16.7 |
| Sample 16 | 9.0 | 67.6 | 15.7 | 16.5 |
| Sample 17 | 9.2 | 65.2 | 15.6 | 16.2 |
| Sample 18 | 9.3 | 65.2 | 15.6 | 16.2 |
| Sample 19 | 10.5 | 66.7 | 17.0 | 15.7 |
| Sample 20 | 10.0 | 66.8 | 16.9 | 16.8 |

The results of Tables 7 and 8 given above indicate that even when the dielectric layers are made of different materials, as long as the reflection chromaticity of the single plate and the value of the glass surface side visible light reflectance fall within the above ranges, it is possible to obtain double paned glass achieving both excellent visible light reflectance and excellent reflection chromaticity. They also indicate that, by keeping the optical thickness of each dielectric layer substantially constant, even when part of dielectric material is replaced by other dielectric material(s), no significant change occurs in the reflection chromaticity and visible light reflectance of the single plate. When the dielectric material is replaced, for example, by adjusting the physical thickness of each dielectric layer, it is possible to obtain similar optical properties.

### Industrial Applicability

As described above, according to the glass member of the present invention, it is possible to realize a low reflectance while achieving a colorless or pale blue reflection color tone or a bluish green or green reflection color tone, as well as to obtain excellent photocatalytic activity. Thus, according to the double paned glass including the glass member of the present invention, it is possible to achieve high photocatalytic activity while achieving excellent reflectance and reflection color tone in the photocatalyst layer side surface. Therefore, it is suitable for use as double paned glass for large construction use that requires excellent photocatalytic function and a clear appearance.

## Claims

1. A glass member in which a heat reflecting layer is laminated on one surface of a glass substrate and a photocatalyst layer is laminated on the other surface thereof,
wherein the glass substrate and the heat reflecting layer are combined such that, in a state in which the heat reflecting layer is laminated on one surface of the glass substrate and the photocatalyst layer is not laminated on the other surface of the glass substrate, the other surface of the glass substrate has a reflection chromaticity (a*, b*) satisfying -4≤a*≤2 and -5≤b*≤0 and a visible light reflectance of 10% or less,
an antistripping layer, a crystalline undercoat layer and the photocatalyst layer are laminated in this order on the other surface of the glass substrate,
the crystalline undercoat layer has a thickness ranging from 2 to 28 nm and the photocatalyst layer has a thickness ranging from 2 to 20 nm, and the antistripping layer comprises at least one material selected from the group consisting of an oxide, an oxynitride and a nitride containing at least one of silicon and tin.

2. The glass member according to claim 1,
wherein the crystalline undercoat layer has a thickness ranging from 3 to 20 nm, and the photocatalyst layer has a thickness ranging from 3 to 12 nm.

3. A glass member in which a heat reflecting layer is laminated on one surface of a glass substrate and a photocatalyst layer is laminated on the other surface thereof,
wherein the glass substrate and the heat reflecting layer are combined such that, in a state in which the heat reflecting layer is laminated on one surface of the glass substrate and the photocatalyst layer is not laminated on the other surface of the glass substrate, the other surface of the glass substrate has a reflection chromaticity (a*, b*) satisfying -15≤a*≤-2 and -10≤b*≤10 and a visible light reflectance of 13% or less,
an antistripping layer, a crystalline undercoat layer and the photocatalyst layer are laminated in this order on the other surface of the glass substrate,
the crystalline undercoat layer has a thickness ranging from 2 to 28 nm, and the photocatalyst layer has a thickness ranging from 2 to 14 nm, and the antistripping layer comprises at least one material selected from the group consisting of an oxide, an oxynitride and a nitride containing at least one of silicon and tin.

4. The glass member according to claim 3,
wherein the crystalline undercoat layer has a thickness ranging from 3 to 18 nm, and the photocatalyst layer has a thickness ranging from 3 to 8 nm.

5. The glass member according to claim 1 or 3,
wherein the antistripping layer comprises at least one material selected from the group consisting of an amorphous oxide, an amorphous oxynitride and an amorphous nitride containing at least one of silicon and tin.

6. The glass member according to claim 1 or 3,
wherein the antistripping layer comprises silicon oxide.

7. The glass member according to claim 1 or 3,
wherein the crystalline undercoat layer comprises at least one of a metal oxide and a metal oxynitride.

8. The glass member according to claim 7,
wherein the crystalline undercoat layer comprises at least one of zirconium oxide and zirconium oxynitride.

9. The glass member according to claim 8,
wherein the zirconium oxide is monoclinic zirconium oxide.

10. The glass member according to claim 1 or 3,
wherein the photocatalyst layer comprises at least one of a metal oxide and a metal oxynitride.

11. The glass member according to claim 10,
wherein the photocatalyst layer comprises at least one of a crystalline metal oxide and a crystalline metal oxynitride.

12. The glass member according to claim 10,
wherein the photocatalyst layer comprises at least one of titanium oxide and titanium oxynitride.

13. The glass member according to claim 12,
wherein the titanium oxide is anatase type titanium oxide.

14. The glass member according to claim 1 or 3,
wherein the heat reflecting layer is a multilayer laminate (a dielectric/ Ag/ a dielectric/ Ag/ a dielectric) in which a dielectric, silver, a dielectric, silver and a dielectric are laminated in this order.

15. The glass member according to claim 1 or 3,
wherein the antistripping layer comprises silicon oxide, the crystalline undercoat layer comprises zirconium oxide, and the photocatalyst layer comprises titanium oxide.

16. Double paned glass comprising two glass plates and a spacer placed therebetween so as to create a space between the facing surfaces of the two glass plates,
wherein at least one of the glass plates is a glass member according to claim 1 or 3, and
the photocatalyst layer of the glass member is placed such that the photocatalyst layer serves as an outermost layer of the double paned glass.

## Amended claims

### Amended claims under Art. 19.1 PCT

**1.** (Amended) Double paned glass comprising two glass plates and a spacer placed therebetween so as to create a space between the facing surfaces of the two glass plates,
wherein at least one of the glass plates is a glass member in which a heat reflecting layer is laminated on one surface of a glass substrate and a photocatalyst layer is laminated on the other surface thereof,
in the glass member, the glass substrate and the heat reflecting layer are combined such that, in a state in which the heat reflecting layer is laminated on one surface of the glass substrate and the photocatalyst layer is not laminated on the other surface of the glass substrate, the other surface of the glass substrate has a reflection chromaticity (a*, b*) satisfying -4≤a*≤2 and -5≤b*≤0 and a visible light reflectance of 10% or less,
an antistripping layer, a crystalline undercoat layer and the photocatalyst layer are laminated in this order on the other surface of the glass substrate,
the crystalline undercoat layer has a thickness ranging from 2 to 28 nm, and the photocatalyst layer has a thickness ranging from 2 to 20 nm,
the antistripping layer comprises at least one material selected from the group consisting of an oxide, an oxynitride and a nitride containing at least one of silicon and tin,
the photocatalyst layer of the glass member is placed such that the photocatalyst layer serves as an outermost layer of the double paned glass, and
the visible light reflectance of the photocatalyst layer side surface of the double paned glass is 20% or less, and the reflection chromaticity (a*, b*) of the photocatalyst layer side surface satisfies -5<a*<0 and -12<b*<0.

**2.** (Amended) The double paned glass according to claim 1,
wherein the crystalline undercoat layer has a thickness ranging from 3 to 20 nm, and the photocatalyst layer has a thickness ranging from 3 to 12 nm, and
the visible light reflectance of the photocatalyst layer side surface of the double paned glass is 17.5% or less, and the reflection chromaticity (a*, b*) of the photocatalyst layer side surface satisfies -5<a*<0 and -8<b*<0.

**3.** (Amended) Double paned glass comprising two glass plates and a spacer placed therebetween so as to create a space between the facing surfaces of the two glass plates,
wherein at least one of the glass plates is a glass member in which a heat reflecting layer is laminated on one surface of a glass substrate and a photocatalyst layer is laminated on the other surface thereof,
in the glass member, the glass substrate and the heat reflecting layer are combined such that, in a state in which the heat reflecting layer is laminated on one surface of the glass substrate and the photocatalyst layer is not laminated on the other surface of the glass substrate, the other surface of the glass substrate has a reflection chromaticity (a*, b*) satisfying-15≤a*≤-2 and -10≤b*≤10 and a visible light reflectance of 13% or less,
an antistripping layer, a crystalline undercoat layer and the photocatalyst layer are laminated in this order on the other surface of the glass substrate,
the crystalline undercoat layer has a thickness ranging from 2 to 28 nm, and the photocatalyst layer has a thickness ranging from 2 to 14 nm,
the antistripping layer comprises at least one material selected from the group consisting of an oxide, an oxynitride and a nitride containing at least one of silicon and tin,
the photocatalyst layer of the glass member is placed such that the photocatalyst layer serves as an outermost layer of the double paned glass, and
the visible light reflectance of the photocatalyst layer side surface of the double paned glass is 20% or less, and the reflection chromaticity (a*, b*) of the photocatalyst layer side surface satisfies -12<a*<-2 and -10<b*<5.

**4.** (Amended) The double paned glass according to claim 3,
wherein the crystalline undercoat layer has a thickness ranging from 3 to 18 nm, the photocatalyst layer has a thickness ranging from 3 to 8 nm, and
the visible light reflectance of the photocatalyst layer side surface of the double paned glass is 17.5% or less, and the reflection chromaticity (a*, b*) of the Photocatalyst layer side surface satisfies -9<a*<-3.7 and -10<b*<4.

**5.** (Amended) The double paned glass according to claim 1 or 3,
wherein the antistripping layer comprises at least one material selected from the group consisting of an amorphous oxide, an amorphous oxynitride and an amorphous nitride containing at least one of silicon and tin.

**6.** (Amended) The double paned glass according to claim 1 or 3,
wherein the antistripping layer comprises silicon oxide.

**7.** (Amended) The double paned glass according to claim 1 or 3,
wherein the crystalline undercoat layer comprises at least one of a metal oxide and a metal oxynitride.

**8.** (Amended) The double paned glass according to claim 7,
wherein the crystalline undercoat layer comprises at least one of zirconium oxide and zirconium oxynitride.

**9.** (Amended) The double paned glass according to claim 8,
wherein the zirconium oxide is monoclinic zirconium oxide.

**10.** (Amended) The double paned glass according to claim 1 or 3,
wherein the photocatalyst layer comprises at least one of a metal oxide and a metal oxynitride.

**11.** (Amended) The double paned glass according to claim 10,
wherein the photocatalyst layer comprises at least one of a crystalline metal oxide and a crystalline metal oxynitride.

**12.** (Amended) The double paned glass according to claim 10,
wherein the photocatalyst layer comprises at least one of titanium oxide and titanium oxynitride.

**13.** (Amended) The double paned glass according to claim 12,
wherein the titanium oxide is anatase type titanium oxide.

**14.** (Amended) The double paned glass according to claim 1 or 3,
wherein the heat reflecting layer is a multilayer laminate (a dielectric/ Ag/ a dielectric/ Ag/ a dielectric) in which a dielectric, silver, a dielectric, silver and a dielectric are laminated in this order.

**15.** (Amended) The double paned glass according to claim 1 or 3,
wherein the antistripping layer comprises silicon oxide, the crystalline undercoat layer comprises zirconium oxide, and the photocatalyst layer comprises titanium oxide.

**16.** (Cancelled)
